# EUROPEAN PATENT APPLICATION

(11) **EP 4 736 655 A1**
(43) Date of publication of application: **06.05.2026**
(21) Application number: 24383195.5
(22) Date of filing: 31.10.2024
(51) Int. Cl.: A22C 11/02, A22C 11/10, A22C 11/12

(54) **A MACHINE FOR FORMING AND CLOSING STUFFED MEAT PRODUCTS**

(71) Applicant: Lorenzo Noguera, Sagar, 08302 Mataro (ES)
(72) Inventor: Lorenzo Noguera, Sagar, 08302 Mataro (ES)
(74) Representative: ABG Intellectual Property Law, S.L.

(57) **Abstract**

The invention relates to a machine (1) for forming and closing stuffed meat products with a stuffing unit (2) and a closing unit (3), juxtaposed to one another, the stuffing unit (2) comprising braking means (22) of a tubular casing which is mounted in a displaceable manner between a production position (P), located in the stuffing unit (2), and a replacement position (R), located in the closing unit (3) the braking means (22) having for that purpose at least partially gone through the passage window (v1) of a first constrictor (31) of the closing unit (3) which is equipped with at least one movable auxiliary diaphragm element (31c) of a passage window of a filled casing portion delivered by the stuffing unit (2).

## Description

### Technical sector of the invention

The invention relates to a machine for forming and closing stuffed meat products, such as sausages. The machine comprises a stuffing unit, configured to stuff food material that can be extruded inside a tubular casing; and a closing unit, configured to form successive portions of the material stuffed inside the casing and thus prepare it to be able to apply accessory closing elements between said portions.

### Background of the invention

A known technique for automating sausage production consists of extruding the food material inside a continuous tubular casing and of separating portions of the filled casing. The first operation is typically performed in a stuffing unit or module and the second operation is performed in a closing unit or module. The stuffing unit and the closing unit are juxtaposed to one another such that successive casing portions that are slowly filled with the extruded material in the stuffing unit are delivered to the closing unit.

The stuffing unit has a feeding tube with an extrusion mouth for extruding the food material, the tube being used to mount, outside of same and in the form of a sleeve, a casing accumulation with one end protruding from the extrusion mouth so that the material that is gradually extruded is stuffed inside a casing portion, which is drawn by friction with the extruded material, from the casing accumulation. To obtain tension in the drawn casing portion, braking means for the casing are provided. The braking means have a generally annular-shaped brake support which receives, in a production position, the engagement of the extrusion mouth with the casing to be braked and with which it interacts to brake its forward movement. When the casing accumulation runs out, the feeding tube needs to be disengaged from the braking means in order to load a new casing accumulation in the feeding tube.

Patent documents ES2324274, US7455578, US7704130, and US20110183590 exemplify, among others, respective braking means of the type described above.

To produce this disengagement of the feeding tube and the braking means, one resource consists of displacing the stuffing unit or the closing unit to leave maneuvering room, namely for disengaging the feeding tube from the braking means.

Patent document EP2708137 exemplifies the first option. Solutions of this kind require moving bulky and heavy equipment.

Patent documents US20140127985, EP2730169, and EP4272566, among others, exemplify a type of first alternative which essentially consists of mounting the assembly made up of the braking means and the feeding tube with the possibility to rotate around a shaft secured to the stuffing unit; and in turn of linking the braking element to the feeding tube such that the former can be displaced in an axially guided manner with respect to the latter, between end engagement and disengagement positions. The disengagement position can be adopted without interfering with the closing unit if it is undertaken while the assembly is being rotated, tilted to one side, with respect to the position aligned with the closing unit that it normally adopts in production. These solutions still require moving, in this case rotating, bulky and heavy mechanisms.

Patent documents DE202009013062, US8870635, and EP2767168 exemplify, among others, a type of second alternative and related improvements which essentially consist of mounting only the feeding tube with the possibility to rotate around a shaft secured to the stuffing unit however mechanically linking the braking means to a guide to force the displacement thereof first in a direction with a strong component transverse to the stuffing direction and then following a composition of movement with a component in the stuffing direction when the supply tube is maneuvered to rotate it, tilting it to one side, with respect to the position aligned with the closing unit that it normally adopts in production. These solutions produce certain wear of the parts engaged with one another because at the start of a disengagement operation and upon completing an engagement operation, a relative movement is produced between the parts, said movement being lateral, which is not exclusively in the direction of the mutual separation or attachment thereof, respectively.

Patent document EP1231841 discloses a proposal, devised in 1999, much earlier than the others explained above, which contemplates mounting the braking means in a displaceable manner and in the stuffing direction from a production position in the stuffing unit to a replacement position in the closing unit, invading the working area of said closing unit, to disengage the feeding tube from the braking means, without having to separate the stuffing unit from the closing unit.

Implementing this proposal requires the parts or mechanisms of the closing unit not to interfere in the path of the braking means during their displacement, in the direction of disengagement with the feeding tube, until reaching the replacement position.

Constrictors are among these parts or mechanisms of the closing unit.

A constrictor is an actuatable mechanism configured to reduce the cross-section of a filled casing portion, bringing the casing together sufficiently so that an accessory closing element can be applied to it to tightly enclose it. Conventional accessory closing elements are, by way of example only, staples, metal or metal-cored bands, clips, or cords to be tied in a knot around the casing.

To perform this function, the constrictor has movable parts the instantaneous position of which determines the width of a passage window for the freshly filled casing portion delivered by the stuffing unit. In a position of maximum distance of the movable parts of a constrictor from one another, its passage window offers a non-operating width, suitable for not altering the cross-section of the filled casing portion, while displacing said movable parts in a direction in which they move closer to one another closes the passage window until reaching an operating width, suitable for reducing, by constriction, the cross-section of the filled casing portion.

A particular type of closing unit is one having two constrictors in series mounted on the closing unit, of which the constrictor farthest from the braking means can be displaced so as to alter the distance separating the constrictors from each other between a minimum distance and a maximum distance suitable to produce, when passing from the minimum distance to the maximum distance by their passage windows adopting the operating width, an empty longitudinal casing portion between filled casing portions on which the closing accessory element or elements will be applied.

A solution so that at least the constrictor closest to the stuffing unit does not interfere with the braking means during its displacement in the direction of disengagement with the feeding tube consists of being able to actuate the movable parts of the two constrictors in different ways, specifically so that the non-operating width of the passage window of the constrictor closest to the closing means is sufficient so as not to interfere with the braking means during its displacement in the direction of disengagement with the feed tube. This would allow the braking means to be housed between the movable parts of this constrictor closest to the stuffing unit, which may be sufficient to cause the disengagement of the feeding tube.

This solution requires mechanically complicating the closing unit as it means either having to use separate actuators for the movable parts of the two constrictors to change the width of their passage windows in different ways or having to use multiplier or reduction gears from a common actuator to impart a greater amount of movement to the movable parts of the constrictor closest to the stuffing unit to provide a larger non-operating width of its passage window.

Another solution consists of simply using identical constrictors and actuating their movable parts equally so that the non-operating width of the passage window of both, and not just that of the constrictor closest to the stuffing unit, is at least sufficient so that the constrictor closest to the stuffing unit does not interfere with the braking means during the displacement thereof in the direction of disengagement with the feeding tube. Advantageously, this would further allow the braking means to be housed between the movable parts of both constrictors by the latter adopting their relative position of minimum distance. This is the solution that would implement the proposal according to patent document EP 1231841.

However, this option quickly lost interest because it means having to transmit to the movable parts of the constrictors a too long stroke and prevents being able to compact the closing machine because the non-operating width of the passage window required so that the constrictors do not interfere with the braking means in the path of the latter during their displacement in the direction of disengagement with the feeding tube is detrimental when the same movable parts that obtain this non-operating width of the passage window must obtain an operating width of the passage window that is sufficiently small so as to cause a reduction in the cross-section of the casing, in particular when it is intended to reduce as much as possible the number of the aforementioned movable parts and it is desired to manufacture stuffed products with a reduced cross-section.

Indeed, it happens that the leading profile of the movable parts of a constrictor must prevent forming a passage window the contour of which has sharp internal angles when the filled casing is constricted, otherwise it can cause an undesired pinching of the casing and cut it by shearing. This leads to having to suitably design the leading profile of the movable parts of the constrictors, where the freedom of the designer is more restricted the fewer movable parts a constrictor has. It so happens that those profiles that are suitable for the constrictor to provide a non-operating passage width necessary to not interfere with the path of braking means are not the most suitable for constricting the filled casing without damaging it.

When stuffed products with a reduced cross-section are to be manufactured, the abovementioned incompatibility is further aggravated.

When stuffed products the casing of which is not resistant are to be manufactured, the abovementioned incompatibility is further aggravated.

A solution that overcomes all the abovementioned drawbacks is desirable.

A constructively simple, compact, and versatile solution is also desirable.

### Description of the invention

The machine that is proposed is a machine according to claim 1.

The machine has a stuffing unit and a closing unit, juxtaposed to one another,
- the stuffing unit comprising at least one feeding tube with an extrusion mouth for extruding the material to be stuffed; and braking means configured to provide tension in a casing portion that can be drawn by friction with the extruded material from a casing accumulation, in the form of sleeve that can be loaded around the tube, which will be filled with the extruded material; and
- the closing unit comprising a first constrictor and a second constrictor in series for the filled casing portion delivered by the stuffing unit, of which the second constrictor, the one farthest from the braking means, is displaceable with respect to the first constrictor to alter the instantaneous distance that separates them.

Each constrictor has at least first and second plates, which can be actuated rotatably, the instantaneous relative position of which conditions the opening of a passage window for the casing portion between a non-operating width, suitable for not altering the cross-section of the filled casing portion, and an operating width, suitable for constricting and reducing the cross-section of the filled casing portion.

Essentially, the machine is characterized in that
- the braking means of the stuffing unit are mounted in a displaceable manner between a production position, located in the stuffing unit and the extrusion mouth of the feeding tube being engaged with the braking means, and a replacement position, located in the closing unit, the braking means having for that purpose at least partially gone through the passage window of the first constrictor, and the extrusion mouth of the feeding tube being disengaged from the braking means, and in that
   - at least said first constrictor is equipped with at least one movable auxiliary diaphragm element, driven by at least one of the first or second plates of the first constrictor, and the instantaneous position of which conditions, together with the associated plates, the opening of the passage window for the filled casing portion.

With the contribution of the auxiliary diaphragm element, the necessary width to be provided by the passage window of a constrictor so as not to interfere with the braking element in its path towards the replacement position is not detrimental for the casing of the filled casing portion to be constricted by said constrictor.

Indeed, as described in detail below, the auxiliary diaphragm element prevents the contour of the passage window from having a sharp internal angle formed by the intersection between the first and second plates of the constrictor when the filled casing is constricted, which intersection would otherwise be a source of unwanted pinching of the casing and cut it by shearing.

It is emphasized that the auxiliary diaphragm element is driven by one or both plates of the same constrictor equipped with said auxiliary diaphragm element. Then, no express motorization is necessary to move the auxiliary diaphragm element.

In a variant of the invention, the auxiliary diaphragm element of the first constrictor is made up of the central portion of a lever
- with a first end connected rotatably to one of the first plate or the second plate and around a first shaft parallel to a rotation shaft around which the plate in question is mounted rotatably in the closing unit; and with a second end connected rotatably to a transmission arm and around a second shaft parallel to the first shaft,
- the transmission arm in turn being connected rotatably to the other one of the first plate or second plate and around a third shaft also parallel to the first shaft.

In a variant of the invention, the auxiliary diaphragm element has a leading profile that is not straight, with different segments intended for sequentially interacting with the filled casing at different times during the transition of the passage window of the first constrictor from its non-operating width to its operating width.

It is contemplated that the auxiliary diaphragm element can be easily changeable, so that an auxiliary diaphragm element with an ideal leading profile for the caliber of the stuffed product to be manufactured can be chosen.

According to a variant of the invention, the non-operating width of the passage window of the first constrictor is sufficient for the braking means to at least partially go through it in the displacement thereof towards the replacement position. That is, it is contemplated that in their replacement position, the braking means are located between the first and second plates of the first constrictor, i.e., inside the passage window. It is also contemplated that in their replacement position, the braking means have gone through the passage window of the first constrictor. As explained below, in this second case it is contemplated that the second constrictor is sufficiently far from the first constrictor so as not to interfere with the braking means and/or that the non-operating width of the passage window of the second constrictor is also sized for the braking means to at least partially go through it.

Therefore, in a variant of the invention, only the first constrictor is equipped with a movable auxiliary diaphragm element.

Preferably, the auxiliary diaphragm element is located on the side of the first constrictor oriented facing the stuffing unit.

In another variant of the invention, the first and second constrictors are equipped with a respective movable auxiliary diaphragm element, with the non-operating width of the passage windows thereof both being suitable so as not to interfere with the braking means.

Preferably, the second constrictor has a substantially mirror symmetry with the first constrictor, therefore, the auxiliary diaphragm element of the second constrictor is located on the side of the second constrictor oriented away from the first constrictor. This leaves more maneuvering room for an applicator of auxiliary closing elements which operates between the first and second constrictors, and furthermore allows the first and second constrictors to be able to move closer to one another.

In a variant of the invention, an actuator group imparts the same amount of rotation to the first plates of the first and second constrictors and the same amount of rotation to the second plates of the first and second constrictors to change the width of the opening of the passage windows thereof, the leading profile of the first and second plates of the second constrictor being different from the leading profile of the first and second plates of the first constrictor, optionally only the leading profile of the plates of the first constrictor being suitable so as not to interfere with the braking means and the second constrictor lacking an auxiliary diaphragm element.

In the variant of the invention in which only the non-operating width of the first constrictor is suitable so as not to interfere with the braking means, it is contemplated that the non-operating width:operating width of the passage window of the first constrictor ratio is at least 10:1, preferably at least 15:1, more preferably at least 20:1.

In the variant of the invention in which only the non-operating width of the first constrictor is suitable so as not to interfere with the braking means, it is contemplated that the non-operating width of the passage window of the first constrictor: non-operating width of the passage window of the second constrictor ratio is at least 1.05:1, preferably at least 1.1:1, more preferably at least 1.15:1.

In a variant of the invention, the first and second plates of the first and second constrictors are rotatable around a common rotation shaft.

The invention contemplates that the stuffing unit comprises several feeding tubes but a single braking means, the feeding tubes being linked to the stuffing unit with the ability to be displaced between a replacement position, outside the range of the braking means, and a production position, within the range of, i.e. engageable with, the braking means.

In a variant of the invention, the closing unit comprises an applicator of at least one closing accessory around an empty casing portion that can be formed between the first and second constrictors when the latter are at a predetermined relative distance, with the respective passage windows adopting their operating width.

### Brief description of the drawings

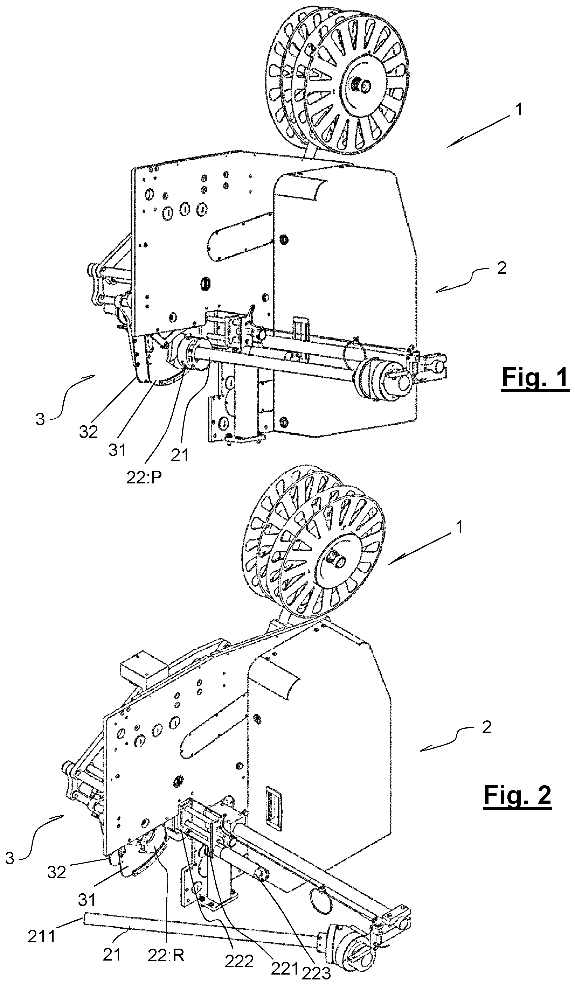

Figures 1 and 2 partially show a machine according to the present invention, seen from the stuffing unit:
- Figure 1, with the braking means in the production position and with the feeding tube engaged; and
- Figure 2, with the braking means in the replacement position and with the feeding tube disengaged.
- Figures 3 and 4 are respective detailed views of the machine of Figure 1, now seen from the closing unit:

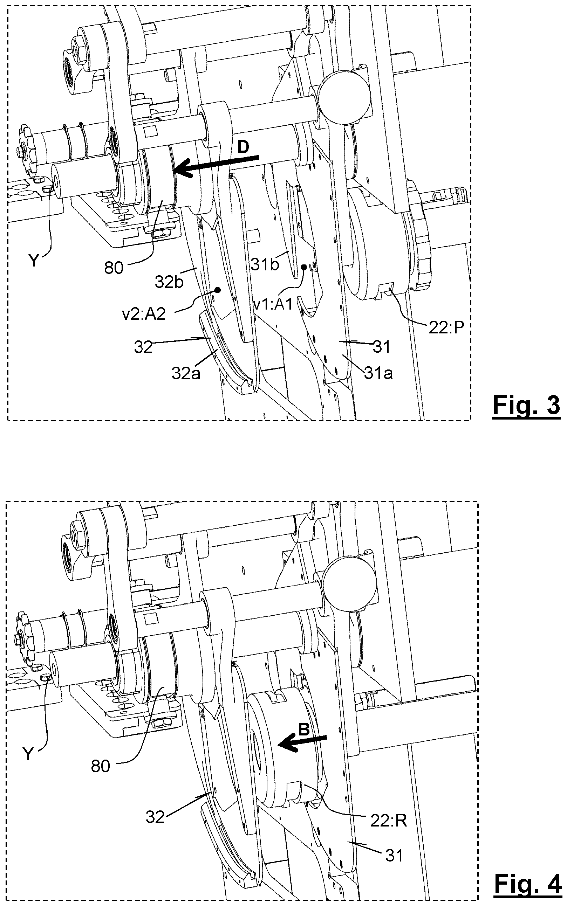

- Figure 3, with the passage windows of the first and second constrictors adopting respective non-operating widths and the braking means adopting their production position; and
- Figure 4, with the passage windows of the first and second constrictors adopting respective non-operating widths and the braking means adopting their replacement position.

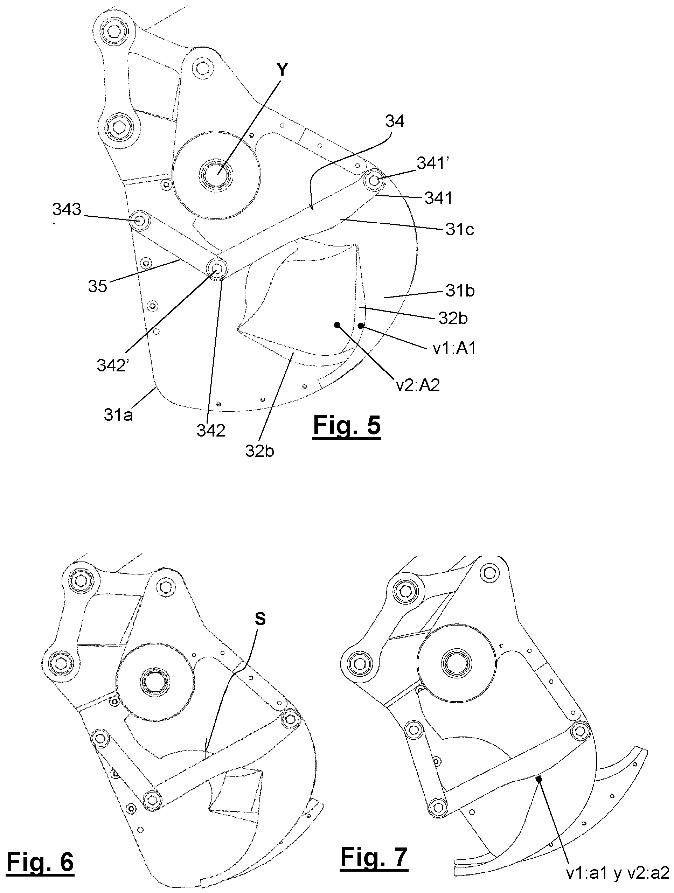

   Figures 5 to 7 are respective front views of the first and second constrictors, one behind the other:
      - Figure 5, with their passage windows providing a non-operating width;
      - Figure 7, with their passage windows adopting an operating width; and
      - Figure 6, with their passage windows adopting an intermediate width.

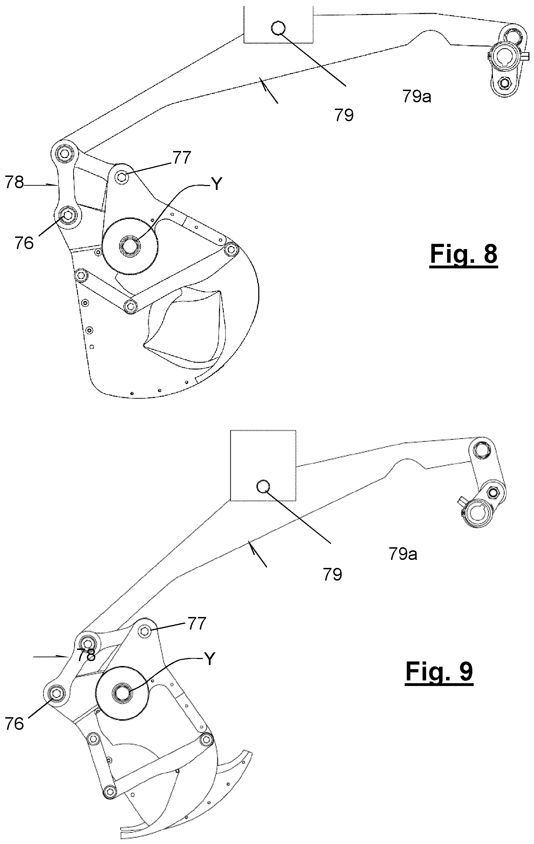

   Figures 8 and 9 are respective front views of a sequence of the actuator group of the plates of the first and second constrictors changing the width of their passage windows:
      - Figure 8, with their passage windows providing a non-operating width; and
      - Figure 9, with their passage windows adopting an operating width.

### Detailed description of the invention

The different parts of a machine 1 exemplifying the invention and which intervene in achieving the invention are shown in the drawings.

Figures 1 and 2 are respective partial views of the machine 1 which, in a known manner, has a stuffing unit 2 and a closing unit 3, juxtaposed to one another. The stuffing unit 2 and closing unit 3 can share a supporting frame or can both have their own supporting frame.

The stuffing unit 2 supplies a filled tubular casing portion with food material which is received in the closing unit 3 where a division of said filled casing portion is made, which requires performing operations for the constriction and application of one, preferably two, accessory closing elements, tightly enclosing the constricted areas, the closing unit being equipped for such purpose with an applicator of accessory closing elements. Optionally, although preferably, either the closing unit 3 or the applicator of accessory closing elements itself also have casing cutting means for transversely cutting said casing between two accessory closing elements applied consecutively to separate stuffed meat products, namely, to separate a finished stuffed meat product from a stuffed meat product being manufactured. Neither the applicator nor the cutting means are visible in the drawings, but at present there are multiple versions thereof compatible with the machine of the invention and which do not need to be particularly adapted for achieving the invention.

The stuffing unit 2 has a tube 21 for feeding the food material to be stuffed inside a tubular casing portion (not depicted). Said tubular casing portion will slowly be drawn from a casing accumulation as the food material is ejected under pressure through an extrusion mouth 211 (not visible in Figure 1, visible in Figure 2) of the tube 21, being drawn by friction with the ejected food material.

For such purpose, the stuffing unit 2 is equipped with braking means 22. The braking means 22 is configured to provide tension in the tubular casing portion drawn from storage. The casing accumulation can be in the form of a gathered sleeve loaded on the tube 21.

The braking means 22 can act on the casing in different possible ways, providing resistance to the forward movement of the casing through same at all times to obtain tension in the casing downstream of the braking means 22.

For the braking means 22 to perform their function on the outer contour or periphery of the casing, the braking means are configured to receive the engagement of the extrusion mouth of the tube 21, as shown in Figure 1, with the interposition of the casing. The braking mechanism or the manner in which the braking means 22 provides resistance to the forward movement of the casing does not affect the implementation of the invention. The mechanism can be adjustable, mechanical, fluidic, or of another known type.

Figure 1 shows the tube 21 with its extrusion mouth engaged in the braking means 22. This position of the braking means 22 with respect to the tube 21 is a production position P, that is, that in which the ejected food material is introduced in a casing portion downstream of the braking means 22 which is drawn from the casing accumulation upstream of the braking means 22.

When the casing accumulation runs out, a new casing accumulation must be loaded in the tube 21. In the machine 1 the loading is performed through the end of the tube 21 with the extrusion mouth 211, but, to that end, the tube 21 must be disengaged from the braking means 22.

In the machine 1 exemplifying the invention, the braking means 22 of the stuffing unit 2 are mounted in a displaceable manner between the production position P of Figure 1, in which said braking means are located in the stuffing unit 2, and a replacement position R, as shown in Figure 2, in which said braking means are located in the closing unit 3.

It is therefore characteristic of the invention that, in this replacement position R, the braking means are located in the closing unit 3. It is even more characteristic of the invention that, to that end, movable parts of the closing unit 3 are particularly prepared so as not to interfere with the path of the braking means 22 from their production position P to their replacement position R, in a practical, simple, versatile, and cost-effective manner.

In the mentioned replacement position R, the tube 21 is not engaged in the braking means 22, releasing the end thereof with the extrusion mouth 211 to perform a replacement maneuver: loading in the tube 21 a new casing accumulation and/or removing from the tube 21 remains of a used casing accumulation.

In the specific exemplary machine 1, to facilitate this replacement maneuver the tube 21 is furthermore mounted rotatably with respect to the frame supporting the stuffing unit 2. With the braking means 22 adopting the replacement position R, the braking means do not hinder the rotation of the tube 21. In Figure 2, precisely the tube 21 adopts the mentioned rotated position.

In other variants of a machine not illustrated, the tube 21 can be mounted in a displaceable manner in other ways with respect to the frame of the stuffing unit 2. For example, it is contemplated that the tube 21 is part of a set of several feeding tubes in a turntable-type arrangement, which allows a feeding tube to be arranged in alignment with the braking means 22 in an production position P engaged with same, while the extrusion mouths of other feeding tubes of the same turntable are accessible and it is possible to operate on same.

It is therefore intended for the machine to have several feeding tubes and single braking means, with the feeding tubes being linked to the stuffing unit with the ability to be displaced between a replacement position, outside the range of the braking means, and a production position, within the range of the braking means.

Advantageously, since the tubes are identical, the braking means must only be calibrated once to operate the same way on the casings accumulated around any of the tubes which, during production, are engaged in the braking means. This prevents having to calibrate several braking means which can give rise to different fine braking adjustments and to an unwanted variability in the production of the stuffed meat products.

The closing unit 3 of the specific exemplary machine 1 is of the type which obtains a longitudinal casing portion that is sufficiently empty to apply on same at least one accessory closing element tightly enclosing it, preferably two accessory closing elements close to one another, although sufficiently far apart to transversely cut the casing between said elements.

An accessory closing element can be a clip, staple, metal band, or a cord tied in a knot around said casing.

As mentioned before, the applicator of these accessory closing elements is not visible in the drawings. As has also been mentioned before, the applicator may be equipped with cutting means, in this case, a transverse cutting tool for cutting the longitudinal casing portion, for example, between the two accessory closing elements, separating a finished stuffed meat product from a stuffed meat product being manufactured.

The parts of the closing unit 3 which intervene to obtain a longitudinal casing portion that is sufficiently empty for applying to same the accessory closing element or elements are shown in the drawings, particularly in Figures 3 to 8.

The closing unit 3 of the specific exemplary machine 1 is of the type having first and second constrictors 31, 32 in series for the filled casing portion which will be delivered by the stuffing unit 2.

Each constrictor 31, 32 has (see Figures 3 to 6) two plates which can be actuated rotatably, the relative position of which conditions the opening of a respective passage window for the filled casing portion. The actuatable plates of the same constrictor have a leading profile designed so that an actuation of said plates in the sense of increasing their overlapping will cause a gradual reduction of the opening of the passage window, pinching off the filled casing portion going through said window.

In the exemplary machine 1, the first constrictor 31 has first and second plates 31a, 31b, which can both be actuated rotatably for them to move closer together or farther apart such that the instantaneous relative position thereof conditions the opening of the passage window v1 between a non-operating width A1 and an operating width a1, of which the non-operating width A1 is suitable for not altering the cross-section of the filled casing portion and the operating width a1 is suitable for constricting and reducing the cross-section of the filled casing portion. As explained below, the actuator group which displaces rotatably the plates of the first constrictor 31 can be controlled electronically, which allows an optimal operating width a1 to be selected depending on the parameters of the stuffed meat product to be closed, such as its caliber, the stuffing pressure, the material of the casing, etc.

In the exemplary machine 1, the second constrictor 32 has first and second plates 32a, 32b, which can both be actuated rotatably for them to move closer together or farther apart such that the instantaneous relative position thereof conditions the opening of the passage window v2 between a non-operating width A2 and an operating width a2, of which the non-operating width A2 is suitable for not altering the cross-section of the filled casing portion and the operating width a1 is suitable for constricting and reducing the cross-section of the filled casing portion. As explained below, the actuator group which displaces rotatably the plates of the second constrictor 32 can be controlled electronically, which allows an optimal operating width a1 to be selected depending on the parameters of the stuffed meat product to be closed, such as its caliber, the stuffing pressure, the material of the casing.

In turn, the second constrictor 32, the one that is furthest from the stuffing unit 2 and therefore the one furthest from the braking means 22, are mounted in a displaceable manner with respect to the supporting frame of the closing unit 3, being able to alter the instantaneous distance *di* separating the first and second constrictors 31 and 32. An auxiliary actuator group 80 is what obtains the displacement of the second constrictor 32 to change the distance *di.*

A typical closing cycle for closing a filled casing portion arranged going through the passage windows v1 and v2 of the first and second constrictors 31, 32 with their plates providing respective passage windows with a non-operating width A1 and A2 and the constrictors adopting their position of maximum closeness, usually comprises actuating the plates of the constrictors so that their passage windows reduce their width to an operating width a1 and a2, constricting the filled casing portion at two points close to one another, and then actuating the second constrictor 32 to space it from the first constrictor 31, with the passage windows thereof maintaining the operating width a1 and a2, with food material displacing inside the casing and an empty longitudinal casing portion being formed between the constrictors, suitable so that the applicator of accessory closing elements (not depicted) can apply one, preferably two, accessory closing elements, tightly enclosing the casing.

As has already been mentioned, it is characteristic of the invention that, in the replacement position R, the braking means 22 are located in the closing unit 3 and that, to that end, movable parts of the closing unit 3 are particularly prepared so as not to interfere with the path of the braking means 22 from their production position P to their replacement position R.

A solution to that end consists of preparing at least the first constrictor 31 so that the opening of the passage window v1 provides a non-operating width A1 sufficient to allow the braking means 22 to at least partially go through it when the latter are displaced from their production position P to their replacement position R, as illustrated in the sequence of Figures 3 and 4.

However, the larger this operating width A1 is, the greater the damage this may cause to a casing when acting on the plates of the constrictor to constrict the casing, namely when the constrictor is to be mechanically simplified.

The invention proposes using a first simple constrictor 31, which is one having only first and second plates 31a and 32b which can be actuated rotatably, but equipping it with a mobile auxiliary diaphragm element 31c but driven by the rotational movement itself of the plates. This auxiliary diaphragm element 31c will protect the casing from being pinched between the first and second plates 31a and 31b, namely preventing the contour of the passage window from having sharp angles detrimental to the casing.

The effect of this auxiliary diaphragm element 31c is shown in the sequence of Figures 6 and 7, with particular reference to Figure 6, in which the critical point of convergence of the movable plates from which the casing is protected has been indicated with the letter S.

In the exemplary machine 1, the auxiliary diaphragm element 31c is mounted on the side of the first constrictor 31 oriented facing the stuffing unit 2. Among other advantages, this arrangement does not hinder being able to move the first and second constrictors 31 and 32 closer to one another, nor does it hinder the maneuverability of the applicator of accessory closing elements which operates between the first and second constrictors 31 and 32.

In the exemplary machine 1, the auxiliary diaphragm element 31c of the first constrictor 31 is made up of the central portion of a lever 34 with a first end 341 connected rotatably to the second plate 31b and around a first shaft 341' parallel to a common rotation shaft Y of both first and second plates 31a and 31b around which said plates are mounted rotatably, with a second end 342 connected rotatably to a transmission arm 35 and around a second shaft 342' also parallel to the rotation shaft Y, the transmission arm 35 in turn being connected rotatably to the first plate 31a and around a third shaft 343' also parallel to the first rotation shaft Y.

It should be noted that the auxiliary diaphragm element 31c has a leading profile that is not straight, and that it has different segments particularly designed for sequentially interacting with the casing to be constricted at different times during the transition of the passage window v1 of the first constrictor 31 from its non-operating width A1 (Figure 5) and its operating width a1 (Figure 7).

For the sake of simplifying the mechanisms of the closing unit 3, it is of interest for the same actuator group to impart the same amount of rotation to the first plates 31a, 32a of the first and second constrictors 31, 32 and the same amount of rotation to the second plates 31b, 32b of the first and second constrictors 31, 32 to change the opening of their passage windows v1, v2.

In a variant of the machine according to the invention, the second constrictor 32 can be a mirror constrictor of the first constrictor 31 shown in Figures 2 to 7, that is, a constrictor with its auxiliary diaphragm element and the latter being arranged on the side of the second constrictor oriented away from the first constrictor.

This provides both first and second constrictors with the ability to simultaneously provide respective passage windows v1, v2 with identical non-operating widths A1, A2 that are sufficient so as not to interfere with the braking means 22 in their displacement from the production position P to the replacement position R. Therefore, this provides the machine with the ability to be able to house the braking means 22, if desirable, in the passage windows v1, v2 of both the first and second constrictors, with the latter adopting their position of maximum closeness.

In the specific machine 1 exemplifying the invention, an alternative in which only the first constrictor 31 is equipped with the auxiliary diaphragm element 31c has been chosen. This exemplary machine 1 is devised so that the braking means 22 can adopt their replacement position R, with the first and second constrictors 31, 32 adopting a relative position different from that of their maximum closeness, namely the second constrictor 32 adopting a position away from the stuffing unit 2 by a measurement that is sufficient so as not to interfere with the path of the braking means 22 from their production position P to their replacement position R, as shown by arrow B in Figure 4.

Advantageously, the first and second plates 32a, 32b of the second constrictor 32 can be configured to provide a passage window v2 with a non-operating width A2 that is sufficient to leave a passage for the filled casing portion to be constricted, but not necessarily sufficient to leave passage for the braking means 22. This allows selecting a leading profile suitable for the first and second plates 32a, 32b that does not need an auxiliary diaphragm element, or other measures, so as not to damage the casing when the plates are actuated to constrict said casing. Accordingly, it is still possible to use a simple constrictor, with a lower number of movable parts, simplifying the machine.

Figure 5 allows showing this different configuration between the first and second plates 31a, 31b of the first constrictor vs. the first and second plates 32a, 32b of the second constrictor 32. Namely, Figure 7 shows both first and second constrictors with their passage windows v1, v2 providing their non-operating passage width A1, A2, which in this case are different, with only the passage width A1 of the first constrictor being sufficiently wide so as not to interfere with the braking means 22.

The exemplary machine 1 therefore complies with A1>A2 without renouncing a1 being substantially the same as a2, and all this can impart the same amount of rotation to the first plates 31a, 32a of the first and second constrictors 31, 32 and the same amount of rotation to the second plates 31b, 32b of the first and second constrictors 31, 32, which in turn allows actuating the plates using a single actuator group 37 and without needing multiplier or reduction gears to transmit a different amount of movement to the first plates 31a, 32a of the first and second constrictors 31, 32 and to the second plates 31b, 32b of the first and second constrictors 31, 32.

The mechanical solution for a single actuator to transmit rotation to the plates of the constrictors may vary, without affecting the implementation of the invention.

The specific exemplary machine 1 uses an articulated parallelogram mechanism, the principle of which will be better understood from Figures 7 and 8.

The set of first and second plates 31a, 31b; 32a, 32b of the first and second constrictors 31, 32 is each a scissor system, where the plates of the same set are articulated around the rotation shaft Y which is common to both sets, with the particularly that the scissors of the second constrictor 32, and the associated set of plates, is longitudinally movable along the mentioned common rotation shaft Y, as indicated by arrow D in Figure 3.

In turn, each plate has a power arm connected rotatably to a guide, the first plates 31a, 32a of the first and second constrictors 31, 32 sharing the same first guide 76, and the second plates 31b, 32b of the first and second constrictors 31, 32 sharing the same second guide 77. Said first and second guides 76, 77 are mechanically linked to two opposite corners of an articulated rhombus 78, where one of the other two opposite corners of which is linked to the common rotation shaft Y, which is fixed to the frame of the closing unit 3, and the other of which is linked to the end of a driving lever 79, actuated and electronically controlled by a motor. As shown in the sequence in Figures 8 and 9, the rotation of the driving lever 79 in either direction around a fulcrum 79a causes the folding or extension of the articulated rhombus 78, simultaneously actuating the scissor systems of the first and second constrictors 31 and 32.

A secondary actuator group 80, for example, a piston type actuator group, obtains the displacement of the scissor system of the second constrictor 32 along the first and second guides 76, 77 and the common rotation shaft Y to vary the distance *di* thereof with respect to the scissor system of the first constrictor 31.

Other variants of the machine are possible. It is conceived, for example, that the first and second plates 32a, 32b of the second constrictor 32 can be configured to provide a passage window v2 with a non-operating width A2 that is not only sufficient to leave a passage for the filled casing portion to be constricted, but is also sufficient to leave passage for the braking means 22. In this variant, only the first constrictor 32 will have an auxiliary diaphragm element despite the fact that the first and second constrictors 31 and 32 can provide a passage window with a width that is sufficient so as not to interfere with the braking means 22.

As regards the displacement of the braking means 22 between their production position P and replacement position R, the specific exemplary machine 1 (see Figure 2) is equipped with a straight guide 221 with a carriage 222 that can slide along the straight guide 221 and supports the braking means 22, the carriage being actuated along the straight guide by a linear actuator 223, for example, a piston-type actuator. Another type of actuator, such as an electric actuator, for example, a screw-type actuator, may be used. The invention even contemplates the absence of an actuator and the possible manual displacement of the carriage along the straight guide. As a skilled person will understand, the shape of the carriage in combination with the length and arrangement of the straight guide must be such that they allow arranging the braking means in their replacement position R.

The piston group can be controlled by a control system. The control system can follow orders generated by an operator or generated by an end-of-load detector.

Equipping machines with end-of-load detectors is known. Contact detectors, for example, of the type comprising a conductive flange applied against the casing and which, once the casing is consumed, closes an electrical circuit that generates an electrical signal, are known. Usually this electrical signal is used to generate visual signals on a display and/or to emit acoustic signals, or otherwise, to warn an operator or even to cause the control system to stop the machine. In the present invention it is conceived to go further and use the signal generated by an end-of-load detector, electrical or otherwise, to control the piston group and to automatically, among other actions, arrange the braking means in their replacement position R.

## Claims

1. A machine (1) for forming and closing stuffed meat products, the machine having a stuffing unit (2) and a closing unit (3), juxtaposed to one another,
- the stuffing unit (2) comprising at least one feeding tube (21) with an extrusion mouth (211) for extruding the material to be stuffed; and braking means (22) configured to provide tension in a casing portion that can be drawn by friction with the extruded material from a casing accumulation, in the form of sleeve that can be loaded around the tube, which will be filled with the extruded material,
- the closing unit (3) comprising a first constrictor (31) and a second constrictor (32) in series for the filled casing portion delivered by the stuffing unit (2), of which the second constrictor (32), the one farthest from the braking means (22), is displaceable with respect to the first constrictor (31) to alter the instantaneous distance (di) that separates them,
each constrictor (31, 32) having at least first and second plates (31a, 31b; 32a, 32b), which can be actuated rotatably, the instantaneous relative position of which conditions the opening of a passage window (v1, v2) for the filled casing portion between a non-operating width (A1, A2) suitable for not altering the cross-section of the filled casing portion and an operating width (a1, a2) suitable for constricting and reducing the cross-section of the filled casing portion,
the machine (1) being **characterized in that**
- the braking means (22) of the stuffing unit (2) are mounted in a displaceable manner between a production position (P), located in the stuffing unit (2) and the extrusion mouth (211) of the feeding tube (21) being engaged with the braking means (22), and a replacement position (R), located in the closing unit (3), the braking means (22) having for that purpose at least partially gone through the passage window (v1) of the first constrictor (31), and the extrusion mouth (211) of the feeding tube (21) being disengaged from the braking means (22), and **in that**
- at least said first constrictor (31) is equipped with at least one movable auxiliary diaphragm element (31c) the instantaneous position of which conditions the opening of the passage window (v1, v2) for the filled casing portion.

2. The machine according to claim 1, **characterized in that** the movable auxiliary diaphragm element (31c) is an element driven by at least one of the first plate (31a) or second plate (31b) of the first constrictor (31).

3. The machine according to claim 2, **characterized in that** the auxiliary diaphragm element (31c) of the first constrictor (31) is made up of the central portion of a lever (34)
- with a first end (341) connected rotatably to one of the first plate (31a) or the second plate (31b) and around a first shaft (341') parallel to a rotation shaft (Y) around which the plate in question is mounted rotatably in the closing unit (3),
- with a second end (342) connected rotatably to a transmission arm (35) and around a second shaft (342') parallel to the first shaft (341'),
- the transmission arm (35) in turn being connected rotatably to the other one of the first plate (31a) or the second plate (31b) and around a third shaft (343') also parallel to the first shaft (341').

4. The machine according to any one of claims 1 to 3, **characterized in that** the auxiliary diaphragm element (31c) has a leading profile that is not straight, with different segments intended for sequentially interacting with the filled casing at different times during the transition of the passage window (v1) of the first constrictor (31) from its non-operating width (A1) to its operating width (a1).

5. The machine according to any one of the preceding claims, **characterized in that** the auxiliary diaphragm element (31c) is interchangeable.

6. The machine according to any one of the preceding claims, **characterized in that** only the non-operating width (A1) of the passage window (v1) of the first constrictor (31) is sufficient for the braking means (22) to at least partially go through it in the displacement thereof towards the replacement position (B).

7. The machine according to the preceding claim, **characterized in that** only the first constrictor (31) is equipped with at least one movable auxiliary diaphragm element (31c).

8. The machine according to claims 6 or 7, **characterized in that** with the braking means adopting the replacement position (R), the second constrictor (32) is displaced a distance (di) with respect to the first constrictor (31) enough so as not to interfere with the braking means (22).

9. The machine according to any one of claims 1 to 6, **characterized in that** the first and second constrictors (31, 32) are each equipped with a respective movable auxiliary diaphragm element.

10. The machine according to the preceding claim, **characterized in that** the auxiliary diaphragm element of the first constrictor (31) is located on the side of the first constrictor oriented facing the stuffing unit; and **in that** the auxiliary diaphragm element of the second constrictor is located on the side of the second constrictor oriented away from the first constrictor.

11. The machine according to any one of the preceding claims, **characterized in that** an actuator group (73) imparts the same amount of rotation to the first plates (31a, 32a) of the first and second constrictors (31, 32) and the same amount of rotation to the second plates (31b, 32b) of the first and second constrictors (31, 32) to change the width of the opening of their passage windows (v1, v2), the leading profile of the first and second plates (32a, 32b) of the second constrictor (32) being different from the leading profile of the first and second plates (31a, 31b) of the first constrictor (31).

12. The machine according to any one of claims 7 to 11, **characterized in that** the non-operating width (A1):non-operating width (A2) ratio of the respective passage windows (v1, v2) of the first and second constrictors (31, 32) is at least 1.05:1, preferably at least 1.1:1, more preferably at least 1.15:1.

13. The machine (1) according to any one of the preceding claims, **characterized in that** the first and second plates (31a, 31b; 32a, 32b) of the first and second constrictors (31, 32) are rotatable around a common rotation shaft (Y).

14. The machine (1) according to any one of the preceding claims, **characterized in that** the stuffing unit (2) comprises several feeding tubes and a single braking means (22), the feeding tubes being linked to the stuffing unit (2) with the ability to be displaced between a replacement position, outside the range of the braking means (22), and a production position, within the range of, i.e. engageable with, the braking means (22).

15. The machine (1) according to any one of the preceding claims, **characterized in that** the closing unit (3) comprises an applicator of at least one closing accessory around an empty casing portion that can be formed between the first and second constrictors (31, 32) when the latter are at a predetermined relative distance (di), with the respective passage windows (v1, v2) adopting their operating width (a1, a2).
